# FASCICULE DE BREVET EUROPEEN

(11) **EP 0 501 080 B1**
(45) Date de publication et mention de la délivrance du brevet: **07.06.1995**
(21) Numéro de dépôt: 91403493.9
(22) Date de dépôt: 01.01.1992
(51) Int. Cl.: D04H 13/00

(54) **Doublure composite anti-feu de vêtement**
Feuerresistenter Verbundfutterstoff für Kleidung
Flame resistant composite lining for cloth

(30) Priorité: 25.02.1991 FR 9102215
(43) Date de publication de la demande: 02.09.1992
(73) Titulaire: LAINIERE DE PICARDIE: Société anonyme, 80200 Peronne (FR)
(72) Inventeur: Paire, Christian, F-80240 Roisel (FR)
(74) Mandataire: Derambure, Christian

(56) Documents cités:
- EP-A- 0 272 793
- EP-A- 0 364 370
- GB-A- 1 272 249
- GB-A- 2 172 546
- US-A- 4 737 396

## Description

La présente invention concerne une doublure selon le préambule de la revendication 1.

Les techniques de fabrication de vêtements de protection, par exemple destinés aux personnes menant la lutte contre le feu, évoluent rapidement.

Le développement de fibres thermostables à conduit à la réalisation et à l'utilisation de feutres qui constituent des couches textiles aérées et ont à la fois de bonnes propriétés d'isolation thermique et une bonne résistance à la transmission des flammes.

Par ailleurs, les films dits "imperméables-respirables", c'est-à-dire imperméables à l'eau liquide mais laissant passer la vapeur d'eau et le gaz carbonique, se sont également développés.

Il est alors apparu que l'association de films imperméables-respirables et de feutres thermostables permet la réalisation de vêtements simultanément confortables, laissant une grande liberté de mouvement à leur utilisateur, étant imperméables et ayant une très bonne résistance au feu.

La demande de brevet EP-A-0 364 370, par exemple, décrit un textile composite anti-feu imperméable de ce type.

Selon la technique décrite dans ce document, le textile composite anti-feu est placé en insert, dans un vêtement, entre sa surface extérieure et sa doublure. L'insert, ainsi monté flottant, des volumes d'air sont ménagés entre cet insert et la surface extérieure du vêtement, d'une part et entre ce même insert et la doublure, d'autre part. Ces volumes d'air jouent le rôle d'isolant et contribuent à donner les propriétés de résistance au feu de l'ensemble du vêtement.

Un inconvénient de cette disposition est que les confectionneurs doivent, lors de la fabrication du vêtement, associer trois éléments : la surface extérieure, l'insert et la doublure. Cela à conduit à des procédés de fabrication relativement onéreux.

On a également proposé de réaliser des inserts composites formés d'un tissu tissé et d'une couche non tissée : chacune des couches comporte un mélange de fibres thermostables et de laine, la proportion de laine étant plus élevée dans le tissu tissé que dans la couche non tissée (US-4 849 280 ; US-4 937 136). Ces inserts ne sont pas eux-mêmes imperméables.

L'objectif de l'invention est de proposer une doublure imperméable et respirable qui lorsqu'elle est utilisée pour la fabrication d'un vêtement anti-feu donne, pour une quantité de matière thermostable comparable, des propriétés supérieures à celles obtenues avec l'utilisation d'un ou de plusieurs inserts, tout en permettant une grande simplicité de confection et donc une diminution des coûts correspondants. Elle doit également avoir une bonne résistance à l'abrasion et au boulochage.

A cet effet, l'invention concerne une doublure composite anti-feu de vêtement, ledit vêtement ayant une surface extérieure, ladite doublure comportant :
- une couche textile de fibres thermostables comportant une première et une deuxième face ;
- un film imperméable et respirable, ledit film étant collé par points sur la première face de la couche textile de fibres thermostables et étant destinée à être en contact avec la surface extérieure du vêtement; et
- une deuxième couche en contact avec la deuxième face de cette couche et destinée à constituer la surface intérieure du vêtement.

Selon l'invention, cette doublure comporte un non-tissé renforcé et associé à la couche textile thermostable par aiguilletage.

Le non-tissé renforcé est avantageusement cousutricoté, il peut aussi être renforcé par un tricot.

Selon un mode de réalisation préféré, la couche de fibres thermostables est non tissée aiguilletée.

De préférence, la couche thermostable comporte des fibres d'aramide.

Dans un autre mode de réalisation, la couche thermostable comporte un mélange de fibres de laine traitées ignifuges ou non traitées et de fibres thermostables.

De préférence, le film est à base de polyuréthane ignifugé par adjonction d'un additif appartenant à la famille des produits azotés et phosphorés.

De préférence, le non-tissé renforcé est lui-même ignifugé.

Le film est avantageusement collé par points sur la couche de fibres thermostables.

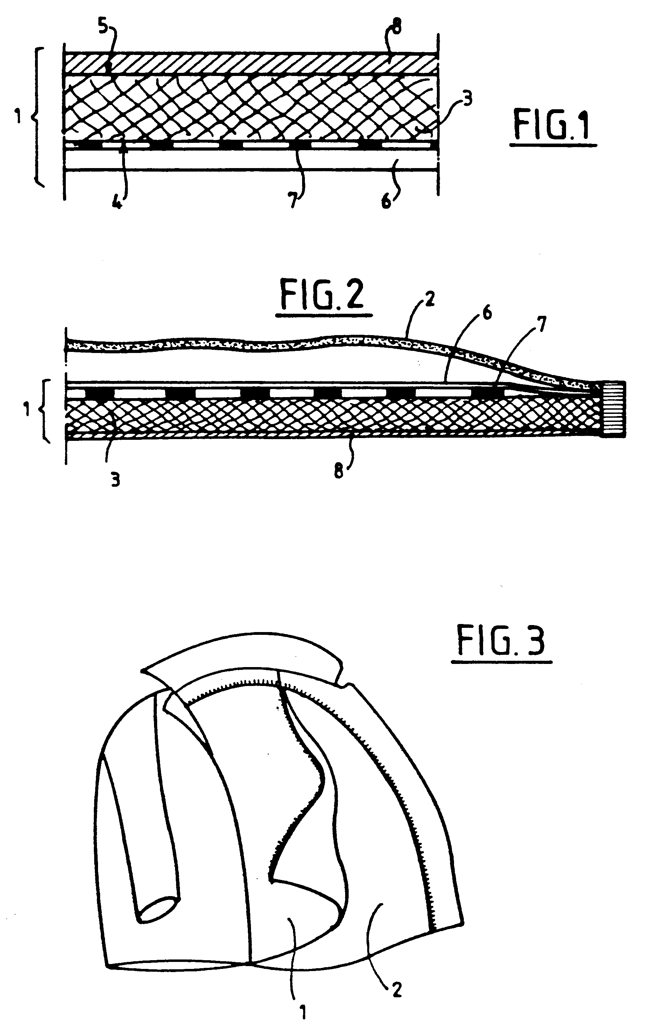

L'invention sera décrite en détail en référence aux figures dans lesquelles :
. La figure 1 est une vue en coupe de la doublure composite selon l'invention.
. La figure 2 est une vue en coupe partielle de la doublure de l'invention associée à la surface extérieure d'un vêtement.
. La figure 3 est une représentation d'un vêtement comportant la doublure de l'invention.

La doublure composite anti-feu de vêtement est constituée d'un textile composite unitaire qui peut être manipulé, découpé, cousu, collé, etc. de manière analogue et selon les mêmes techniques qu'une couche textile unique.

Elle est composé de trois couches au moins.

Une couche textile 3 de fibres thermostables contribue pour l'essentiel à assurer la résistance et l'isolation au feu de la doublure composite. Elle est de préférence composée d'un feutre, d'une nappe ou d'un non-tissé gonflé, peu dense, c'est-à-dire enfermant pour une masse donnée de fibres, un grand volume d'air. Elle est de préférence non tissée aiguilletée.

Différents types de libres connues en elles-mêmes pour leurs propriétés thermostables ou thermo-réticulées peuvent être utilisées pour réaliser cette couche. On a obtenu de bons résultats avec des libres de la famille des aramides, par exemple de polyamide-imide. Un mélange de fibres de laine traitées ignifuges ou non traitées et de fibres thermostables procure également de très bons résultats. Dans ce cas, la proportion en poids de fibres de laine est de préférence comprise entre 30% et 50%. Une proportion de 40% est préférée.

On peut également utiliser des fibres en méta ou para-aramide, polyamide-imide, polyacrylate, polybenzimidazole, copolyimide aromatique, polyacrylonitryle oxyde, polyacrylate, polysulfure de phénylène, polyester éther cétone, FR viscose, FR coton ou en un composé phénolique ou encore fuorocarbonnées ou modacryliques. Un mélange de ces fibres thermostables ou thermo-réticulées peut également être utilisé.

Ces fibres peuvent être soit thermostables par nature, soit ignifugées postérieurement à leur fabrication, par exemple la laine peut être traitée Zirpro c'est-à-dire à base d'héxafluorozirconate de potassium (K₂ Zᵣ F₆).

Dans ce dernier cas, des chlorofibres, des viscoses, de polyesters ou de la laine peuvent également être utilisés.

A titre d'exemple, cette couche thermostable peut être avantageusement une couche non tissée aiguilletée à base de fibres thermostables de polyamide-imide constituée de fibres ayant une longueur de coupe de 40 à 60mm pour un denier de 2,2 à 3 décitex.

Ainsi, pour un grammage de 200g/m² et une épaisseur de 4mm, ce feutre contient de 40 à 50% de volume d'air emprisonné entre les fibres et offre une excellente isolation thermique au froid et/ou au feu.

La deuxième couche de la doublure de l'invention est un film 6 qui est de préférence fixé sur l'une des faces, par exemple dite première face, de la couche textile 3 de fibres thermostables.

Ce film 6 est imperméable-respirable, c'est-à-dire qu'il est imperméable à l'eau liquide mais laisse librement circuler la vapeur d'eau et le gaz carbonique. Il est imperméable ou présente un effet déperlant aux hydrocarbures, acides, bases et solvants.

Différents modes de réalisation de ce film 6 sont possibles.

Ce peut être un film hydrophile à base de polyester.

Il peut également s'agir d'un film microporeux, à base de polyuréthane.

Ce peut également être un film à base de polytétrafluoroéthylène (PTFE).

Ce film 6 est de préférence à base de polyuréthane ignifugé par adjonction d'un additif azoté et phosphoré.

Le film 6 est de préférence fixé sur la couche de fibres thermostables 3 par un collage par points qui permet de conserver la respirabilité du film 6 et assure un bon volume et une grande souplesse à l'ensemble ainsi constitué.

De nombreuses méthodes de collage permettent ce type d'adhésion. On peut utiliser des polymères thermoplastiques, tels que les polyamides, polyesters, polyuréthanes, des polymères réticulables par eux-mêmes, tels que des polyuréthanes bi-composants, des copolymères éthylène-acide acrylique, des terpolymères éthylène-ester acrylique-anhydryde maléique..., ou par l'action d'agents de réticulation incorporés à l'adhésif tels qu'une résine mélamine formaldéhyde, une résine urée formaldéhyde, une résine phénol formaldéhyde, un hydroxyle de métal alcalin, un complexe de zinc ou de zirconium, des polyamines, époxies, des aziridines polyfonctionnelles...

De manière préférée, le polymère thermo-adhésif sera lui-même ininflammable. L'adjonction de trioxyde d'antimoine chloré permet de lui conférer cette qualité.

Les points sont déposés sous forme de pâte ou de poudre ou encore saupoudrés sur la couche thermostable 3 ou sur le film 6. L'association des deux couches est réalisée de manière conventionnelle sur une presse.

On peut ainsi employer une ligne d'enduction de sérigraphie point pâte en phase aqueuse suivie d'une ligne de calandrage. Plus généralement, tout collage discontinu peut convenir.

Ainsi, à l'aide d'un cylindre perforé à 11 Mesh soit 23 trous/cm², on dépose une formulation à base de polymère réticulable sur l'un des substrats, et préférentiellement sur la couche de fibres thermostables 3.

On dépose à une vitesse de 15 à 20m/mn environ 30g/m² humide sur le substrat et l'on obtient, en sortie du four réglé à 130°C, un poids sec de 10 à 12g/m² sur lequel on applique immédiatement à la sortie du four le film microporeux à l'aide d'une calandre refroidie. Par un traitement thermique ultérieur à 150°C, pendant une minute, on obtient la réticulation définitive du collage.

Le complexe couche textile thermostable-film présente, après 24h de repos, les qualités requises.

Le collage pourra également être obtenu en faisant appel au "foamage", c'est-à-dire en intercalant une mousse adhésive entre la couche de fibres thermostables 3 d'une part et, le film 6, d'autre part.

La couche adhésive par points 7 peut encore être réalisée en pulvérisant un adhésif liquide tel que du polyuréthane, éventuellement susceptible de réticuler. La pulvérisation est alors avantageusement faite sur l'un des supports, le second étant appliqué sur le premier par calandrage.

On peut également réaliser la couche adhésive 7 par pulvérisation de "Hot Melt" réticulable à l'humidité possédant une température d'application de 80 à 110°C, on le pulvérise sur la couche thermostable 3 ou sur le film 6 à l'aide d'une batterie de pistolets traditionnels. On applique, ensuite, le second substrat sur le premier par un calandrage à froid.

L'adhésif ainsi appliqué partiellement selon un grammage de 6 à 10g/m² réticule en 24h à l'humidité et permet d'obtenir une adhésion résistant aux différents entretiens de nettoyage, une souplesse importante du complexe par le collage ponctuel.

Il est également possible de faire appel pour la réalisation de la couche adhésive par points 7 à des voiles, films ou grilles thermocollants sur lesquels sont appliquées la couche thermostable 3, d'une part et, le film 6, d'autre part, sous une presse ou même par simple calandrage.

Le complexe feutre de fibres thermostables 3-film 6 présente une bonne imperméabilité, une bonne résistance au feu mais la couche de fibres thermostables à une faible résistance à l'abrasion. Pour cette raison une telle doublure serait peu confortable et aurait une forte tendance au boulochage.

On considère généralement que l'association d'une couche textile de doublure traditionnelle sur ce complexe contribue à améliorer le confort procuré par la doublure et sa résistance mécanique mais réduirait ses propriétés de résistance au feu et rend la confection du vêtement plus difficile.

C'est à l'encontre de cette tendance que, selon l'invention, un non-tissé renforcé 8 est associé à la couche textile 3 thermostable, en contact avec la deuxième face 5 de cette couche. Ce non-tissé renforcé étant destiné à constituer la surface intérieure du vêtement.

De préférence, le non-tissé renforcé 8 est lui-même résistant à la chaleur et à la flamme (chaleur convective et radiante). Il est par exemple constitué d'un mélange de fibres thermostables et de laine ou de viscose. La proportion de laine est avantageusement comprise entre 50% et 80%. Elle est de préférence de 60%.

Plus généralement, toutes les fibres thermostables citées plut haut comme pouvant entrer dans la composition de la couche textile 3 peuvent également être utilisées dans la composition du non-tissé renforcé 8.

L'association étroite du non-tissé renforcé 8 à la couche de libres thermostables 3 permet de donner à la doublure composite sa caractéristique unitaire mentionnée plus haut.

Le non-tissé renforcé 8 peut être cousu-tricoté, c'est-à-dire fabriqué par la technique en elle-même connue de couture-tricotage.

Selon cette technique, des aiguilles, à clapets ou à pistons, traversent une nappe textile et forment des colonnes de mailles, à partir de faisceaux de fibres de la nappe ou avec des fils rapportés. Selon la résistance à la traction et à l'abrasion que l'on souhaite donner au non-tissé cousu tricoté 8, cette formation de mailles est réalisée avec ou sans fil de consolidation. Lorsque l'on utilise un fil de consolidation, il peut être constitué de filaments continus ou de filets de fibres. Il est avantageusement en aramide.

Ces techniques sont connues, par exemple, sous les noms de "MALIVLIES", "MALIWATT", "ARACHNE", "MALIMO", "SCHUSSPOL", ...

Le non-tissé renforcé peut aussi comporter un tricot formé au travers d'une nappe non tissée. Dans ce cas, les colonnes de mailles, formées par des fils rapportés sont liées entre elles ce qui leur donne une plus grande cohésion et, par là, donne une plus grande cohésion à la doublure dans son ensemble. Cette technique de renforcement est en elle-même connue sous le nom "RASCHEL VLIES".

Ce tricot est avantageusement tramé c'est-à-dire que le non-tissé renforcé par les fils de mailles tricotés comprend une couche de fils de trame parallèles insérés dans les rangs de mailles, d'un côté du non-tissé. Les fils de trame sont avantageusement thermostables, par exemple composé de kermel-viscose 50/50 en 40/60 Nm (Numéro métrique).

En règle générale, la couche textile 3 de fibres thermostables et le non-tissé renforcé 8 sont associés avant le collage du film 6 imperméable et respirable sur la couche textile 3 :
On forme tout d'abord un feutre par aiguilletage pour constituer la couche textile de fibres thermostables.

On forme, par ailleurs, une nappe pré-aiguilletée qui alimente une machine à coudre-tricoter pour former la couche cousue-tricotée 8.

La couche textile 3 et le non-tissé renforcé 8 sont ensuite associés par aiguilletage, par passage sur une machine à aiguilleter simple frappe.

A grammage égal, ce composite a un volume supérieur à l'association d'un feutre aiguilleté et d'un tissu tissé et procure donc une meilleure isolation et résistance au feu.

Enfin, le film 6 imperméable et respirable est collé par points sur la couche textile 3 de fibres thermostables.

Il est également possible d'améliorer et de simplifier ce procédé de fabrication en réalisant sur une machine à coudre-tricoter la formation du non-tissé renforcé 8 puis en l'associant par aiguilletage à la couche textile de fibres thermostables non aiguilletée. La couche textile de fibres thermostables est alors aiguilletée en même temps qu'elle est associée au non-tissé renforcé.

Le non-tissé renforcé 8 présente un toucher confortable et a une bonne résistance à l'abrasion, résistance au boulochage même après entretien, nettoyage et lavage. Elle est donc apte à constituer la couche interne d'un vêtement anti-feu et procure à l'ensemble de la doublure de l'invention ses qualités de confort et de résistance à l'abrasion.

Il est possible d'utiliser la même composition de fibres pour réaliser la couche textile thermostable 3 et le non-tissé renforcé 8.

A titre d'exemple, les propriétés d'une doublure composite anti-feu, selon l'invention, sont les suivantes : son étanchéité lui permet de résister à une colonne d'eau d'environ 7 000mm.

Les principaux tests sont là vous vérifier la bonne respirabilité du complexe et son imperméabilité vis-à-vis de l'eau et des hydrocarbures.

La pression d'entrée d'eau (résistance hydrostatique) est mesurée selon le Standard Fédéral 191, méthode 5 512 (MULLEN test) sans tissu extérieur ou doublure, et nous obtenons une valeur de 650kPa, alors que l'on considère la valeur de 310kPa comme suffisante pour assurer une imperméabilité complète sous des conditions tous temps.

La respirabilité d'un complexe imperméable est déterminée en mesurant la résistance à la transmission de vapeur humide selon la norme DIN 54 101 partie 1 et qui donne une résistance au passage de la vapeur d'eau (Ret) de 0,185m².mbar/w. Selon la même norme, une valeur inférieure à 0,200 est nécessaire pour assurer une bonne respirabilité du complexe.

La résistance chimique est mesurée selon la norme NFS 74 302 et l'imperméabilité aux acides, bases et hydrocarbures est supérieure à 90%.

L'indice de protection convective à une flamme de 1 050°C selon la norme ASTM 4 108 donne un indice de protection (TPP) de 40 secondes avec un tissu extérieur PBI-para-aramide 40/60 de 250g/m² (60z/yd²) alors qu'une veste de cuir traditionnellement employée par les pompiers offre un indice de 12 secondes et qu'elle est deux à quatre fois plus lourde qu'une veste réalisée avec le textile composite de l'invention.

La doublure de l'invention permet, par des opérations de confection simplifiées, la réalisation de tous types d'articles tels que vestes, gants, cagoules, pantalons, salopettes... De préférence, les coutures nécessaires pour réaliser la doublure de tels vêtements, par exemple épaules, cols... des vestes sont recouvertes de bandelettes étanches. Cela permet d'améliorer l'étanchéité du vêtement.

Lors de la confection, la doublure de l'invention est avantageusement montée volante par rapport au tissu extérieur et démontable, ce qui permet de recourir à des traitements différents pour le nettoyage de la doublure elle-même, d'une part et de la surface extérieure du vêtement, d'autre part.

## Revendications

1. Doublure (1) composite anti-feu de vêtement, ledit vêtement ayant une surface extérieure (2), ladite doublure comportant :
- une couche textile (3) de fibres thermostables comportant une première (4) et une deuxième (5) face ;
- un film (6) imperméable et respirable, ledit film étant collé par points (7) sur la première face (4) de la couche textile de fibres thermostables et étant destinée à être en contact avec la surface extérieure (2) du vêtement; et
- une deuxième couche en contact avec la deuxième face (5) de la couche textile et destinée à constituer la surface intérieure du vêtement,
caractérisée en ce que la deuxieme couche est un non-tissé renforcé (8) et associé à la couche textile (3) thermostable par aiguilletage.

2. Doublure composite anti-feu selon la revendication 1, caractérisée en ce que le non-tissé renforcé (8) est cousu-tricoté.

3. Doublure composite anti-feu selon la revendication 2, caractérisée en ce que le non-tissé renforcé (8), cousu-tricoté, comporte des fils rapportés.

4. Doublure composite anti-feu selon la revendication 1, caractérisée en ce que le non-tissé est renforcé (8) par un tricot.

5. Doublure composite anti-feu selon la revendication 4, caractérisée en ce que le non-tissé est renforcé (8) par un tricot avec insertion de trame.

6. Doublure composite anti-feu selon la revendication 1, caractérisée en ce que la couche de fibres thermostables (3) est non tissée aiguilletée.

7. Doublure composite anti-feu selon l'une quelconque des revendications 1 à 6, caractérisée en ce que la couche thermostable (3) comporte des fibres d'aramide.

8. Doublure composite anti-feu selon l'une quelconque des revendications 1 à 7, caractérisée en ce que la couche thermostable (3) comporte un mélange de fibres de laine et de fibres thermostables.

9. Doublure composite anti-feu selon l'une quelconque des revendications 1 à 8, caractérisée en ce que le film (6) est hydrophile.

10. Doublure composite anti-feu selon l'une quelconque des revendications 1 à 8, caractérisée en ce que le film (6) est microporeux.

11. Doublure composite anti-feu selon l'une quelconque des revendications 1 à 8, caractérisée en ce que le film (6) est à base de polytétrafluoroéthylène (PTFE).

12. Doublure composite anti-feu selon l'une quelconque des revendications 1 à 8, caractérisée en ce que le film (6) est à base de polyuréthane ignifugé par adjonction d'un additif azoté et phosphoré.

13. Doublure composite anti-feu selon l'une quelconque des revendications 1 à 12, caractérisée en ce que le non-tissé renforcé (8) comporte un mélange de fibres thermostables et de laine.

14. Doublure composite anti-feu selon l'une quelconque des revendications 1 à 12, caractérisée en ce que le non-tissé renforcé (8) est en coton traité ignifuge.

15. Doublure composite anti-feu selon l'une quelconque des revendications 1 à 12, caractérisée en ce que le non-tissé renforcé (8) est en modacrylique.

16. Doublure composite anti-feu selon l'une quelconque des revendications 1 à 15, caractérisée en ce que le collage par points du film (6) sur la couche thermostable (3) est réalisé avec un adhésif réticulable.

## Claims

1. A fireproof composite lining (1) for a garment, said garment having an outer surface (2) and said lining comprising:
- a textile layer (3) of thermostable fibers comprising a first (4) and second face (5);
- a waterproof and respirable film (6), said film being glued point-by-point (7) onto the first face (4) of the textile layer of thermostable fibers and intended for being in contact with the outer surface (2) of the garment; and
- a second layer in contact with the second face (5) of the textile layer and intended to make up the inner surface of the garment,
characterised in that the second layer is a reinforced nonwoven (8) associated with the thermostable textile layer (3) by means of needling.

2. A fireproof composite lining according to claim 1, characterised in that the reinforced nonwoven (8) is sewn and knitted.

3. A fireproof composite lining according to claim 2, characterised in that the sewn and knitted reinforced nonwoven (8) comprises inserted yarns.

4. A fireproof composite lining according to claim 1, characterised in that the nonwoven is reinforced (8) by a knitted fabric.

5. A fireproof composite lining according to claim 4, characterized in that the nonwoven is reinforced (8) by a knitted fabric with a weft insertion.

6. A fireproof composite lining according to claim 1, characterised in that the layer of thermostable fibers (3) is needle punched nonwoven.

7. A fireproof composite lining according to any of claims 1 to 6, characterised in that the thermostable layer (3) comprises aramid fibers.

8. A fireproof composite lining according to any of claims 1 to 7, characterised in that the thermostable layer (3) comprises a mixture of wool fibers and thermostable fibers.

9. A fireproof composite lining according to any of claims 1 to 8, characterised in that the film (6) is hydrophilic.

10. A fireproof composite lining according to any of claims 1 to 8, characterised in that the film (6) is microporous.

11. A fireproof composite lining according to any of claims 1 to 8, characterised in that the film (6) is made of polytetrafluorethylene (PTFE).

12. A fireproof composite lining according to any of claims 1 to 8, characterised in that the film (6) is made of polyurethane which is flame-retarded through the addition of a nitrogenous and phosphorus-containing additive.

13. A fireproof composite lining according to any of claims 1 to 12, characterized in that the reinforced nonwoven (8) comprises a mixture of thermostable fibers and wool.

14. A fireproof composite lining according to any of claims 1 to 12, characterised in that the reinforced nonwoven (8) is made of flame retardancy treated cotton.

15. A fireproof composite lining according to any of claims 1 to 12, characterised in that the reinforced nonwoven (8) is made of modacrylic.

16. A fireproof composite lining according to any of claims 1 to 15, characterised in that the point-by-point glueing of the film (6) onto the thermostable layer (3) is achieved with a cross-linkable adhesive.

## Patentansprüche

1. Feuerbeständiges Verbundfutter (1) für ein Kleidungsstück, wobei das besagte Kleidungsstück eine Außenseite (2) hat und das besagte Futter folgende Elemente aufweist:
- eine Textilschicht (3) aus thermostabilen Fasern mit einer ersten (4) und einer zweiten (5) Seite;
- einen undurchlässigen und atmungsaktiven Film (6), wobei der besagte Film punktweise (7) auf die erste Seite (4) der Textilschicht aus thermostabilen Fasern geklebt ist und mit der Außenseite (2) des Kleidungsstücks in Kontakt stehen soll, und
- eine zweite Schicht, die mit der Zweiten Seite (5) der Textilschicht in Kontakt steht und die Innenseite des Kleidungsstücks bilden soll,
dadurch gekennzeichnet, daß die zweite Schicht ein verstärkter Vliesstoff (8) ist und mit der thermostabilen Textilschicht (3) durch Nadelung verbunden ist.

2. Feuerbeständiges Verbundfutter nach Anspruch 1, dadurch gekennzeichnet, daß der verstärkte Vliesstoff (8) nähgewirkt ist.

3. Feuerbeständiges Verbundfutter nach Anspruch 2, dadurch gekennzeichnet, daß der nähgewirkte Vliesstoff (8) rapportierte Fäden aufweist.

4. Feuerbeständiges Verbundfutter nach Anspruch 1, dadurch gekennzeichnet, daß der Vliesstoff mit einem Strickgewebe verstärkt (8) ist.

5. Feuerbeständiges Verbundfutter nach Anspruch 4, dadurch gekennzeichnet, daß der Vliesstoff mit einem Strickgewebe mit eingearbeitetem Schußfaden verstärkt (8) ist.

6. Feuerbeständiges Verbundfutter nach Anspruch 1, dadurch gekennzeichnet, daß die Schicht aus thermostabilen Fasern (3) nichtgewebt und genadelt ist.

7. Feuerbeständiges Verbundfutter nach einem der Ansprüche 1 bis 6, dadurch gekennzeichnet, daß die thermostabile Schicht (3) Aramidfasern enthält.

8. Feuerbeständiges Verbundfutter nach einem der Ansprüche 1 bis 7, dadurch gekennzeichnet, daß die thermostabile Schicht (3) ein Gemisch aus Woll- und thermostabilen Fasern enthält.

9. Feuerbeständiges Verbundfutter nach einem der Ansprüche 1 bis 8, dadurch gekennzeichnet, daß der Film (6) hydrophil ist.

10. Feuerbeständiges Verbundfutter nach einem der Ansprüche 1 bis 8, dadurch gekennzeichnet, daß der Film (6) mikroporös ist.

11. Feuerbeständiges Verbundfutter nach einem der Ansprüche 1 bis 8, dadurch gekennzeichnet, daß der Film (6) auf der Grundlage von Polytetrafluorethylen (PTFE) hergestellt ist.

12. Feuerbeständiges Verbundfutter nach einem der Ansprüche 1 bis 8, dadurch gekennzeichnet, daß der Film (6) auf Polyurethanbasis hergestellt ist, das durch Beimischung eines stickstoff- und phosphorhaltigen Zusatzstoffes flammenfest wird.

13. Feuerbeständiges Verbundfutter nach einem der Ansprüche 1 bis 12, dadurch gekennzeichnet, daß der verstärkte Vliesstoff (8) ein Gemisch aus thermostabilen Fasern und Wolle enthält.

14. Feuerbeständiges Verbundfutter nach einem der Ansprüche 1 bis 12, dadurch gekennzeichnet, daß der verstärkte Vliesstoff (8) aus flammenfest imprägnierter Baumwolle besteht.

15. Feuerbeständiges Verbundfutter nach einem der Ansprüche 1 bis 12, dadurch gekennzeichnet, daß der verstärkte Vliesstoff (8) aus Modacryl besteht.

16. Feuerbeständiges Verbundfutter nach einem der Ansprüche 1 bis 15, dadurch gekennzeichnet, daß die punktweise Klebung des Films (6) auf die thermostabile Schicht mit einem vernetzbaren Klebstoff durchgeführt wird.
